# EUROPÄISCHE PATENTSCHRIFT

(11) **EP 3 216 517 B1**
(45) Veröffentlichungstag und Bekanntmachung des Hinweises auf die Patenterteilung: **12.09.2018**
(21) Anmeldenummer: 16159578.0
(22) Anmeldetag: 10.03.2016
(51) Int. Cl.: B01F 11/00, B01F 15/00

(54) **VERFAHREN ZUM DURCHMISCHEN EINER FLÜSSIGKEIT IN EINEM AUTOMATISCHEN ANALYSEGERÄT**
METHOD FOR MIXING A LIQUID IN AN AUTOMATIC ANALYZER
PROCEDE DE MELANGE D'UN LIQUIDE DANS UN APPAREIL D'ANALYSE AUTOMATIQUE

(43) Veröffentlichungstag der Anmeldung: 13.09.2017
(73) Patentinhaber: Siemens Healthcare Diagnostics Products GmbH, 35041 Marburg (DE)
(72) Erfinder: Bernhard, Joachim, 61184 Karben (DE); Verhalen, Christian, 65201 Wiesbaden (DE)

(56) Entgegenhaltungen:
- EP-A1- 0 356 883
- EP-A2- 2 308 588
- DE-C- 816 915
- GB-A- 2 062 481
- US-A- 3 061 280
- US-A- 3 809 322

## Beschreibung

Die vorliegende Erfindung liegt auf dem Gebiet der automatischen Analysegeräte und betrifft ein Verfahren zum Durchmischen von Flüssigkeiten in Flüssigkeitsbehältern.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten, erfolgt vielfach, indem ein Aliquot einer Körperflüssigkeit eines Patienten gleichzeitig oder nacheinander mit einer oder mehreren Reagenzflüssigkeiten in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Für den räumlichen Transfer von Flüssigkeitsbehältern sind häufig Greifer zum Erfassen, Halten und Freigeben eines Flüssigkeitsbehälters vorgesehen, die über ein flexibles Verbindungselement mit einem horizontal und vertikal bewegbaren Transferarm verbunden sind. In der EP-A2-2308588 ist eine Vorrichtung zum Transfer eines Flüssigkeitsbehälters, insbesondere zum Transfer von röhrchenförmigen Reaktionsgefäßen (Küvetten), innerhalb eines automatischen Analysegeräts beschrieben. Die Vorrichtung weist einen passiven, elastisch verformbaren Greifer zum kraftschlüssigen Erfassen und Halten eines Flüssigkeitsbehälters auf und eignet sich, eine einzelne, in einer Aufnahmeposition platzierte Küvette aufzunehmen, diese an eine Zielposition zu transportieren und sie dort in einer weiteren Aufnahmeposition abzusetzen.

Ferner ist es häufig notwendig in Flüssigkeitsbehältern enthaltene Flüssigkeiten zu durchmischen. Um präzise Messergebnisse zu erzielen, ist es beispielsweise notwendig, Reaktionsansätze, also Mischungen aus einer zu analysierenden Probenflüssigkeit, wie beispielsweise Blut, Plasma, Serum Urin etc., und einer oder mehreren Reagenzflüssigkeiten, wie beispielsweise Antikörperlösungen oder ähnliches, gleichmäßig zu durchmischen. Ebenso kann es notwendig sein, Reagenzflüssigkeiten, die sedimentierbare Inhaltsstoffe enthalten, wie beispielsweise partikuläre Festphasen, wie z.B. Antikörper-beschichtete Latexpartikel vor Gebrauch zu durchmischen, damit eine homogene Lösung entsteht.

Zu diesem Zweck ist in der Figur 1 der EP-A2-2308588 eine Schütteleinrichtung mit einem um eine senkrechte Drehachse beweglichen Koppelstift beschrieben. Zum Durchmischen einer Flüssigkeitsprobe in einem Flüssigkeitsbehälter wird ein Verfahren umfassend die folgenden Schritte beschrieben:
a. Aufnahme des Flüssigkeitsbehälters mit einem an einem automatisch verfahrbaren Transferarm über ein flexibles Verbindungselement befestigten Greifer, wobei der Greifer ein Koppelloch aufweist; dann
b. Verfahren des Greifers mit dem Flüssigkeitsbehälter zu der Schütteleinrichtung; dann
c. Herstellen einer Verbindung zwischen dem Greifer und der Schütteleinrichtung, wobei die Verbindung durch Einführen des Koppelstiftes der Schütteleinrichtung in das an dem Greifer vorgesehene Koppelloch in zur Drehachse des Koppelstiftes koaxialer Richtung erfolgt; und dann
d. Bewegen des Koppelstiftes.

Der Koppelstift bewegt sich exzentrisch auf einer Kreisbahn und zwingt dem gekoppelten Greifer und damit dem Flüssigkeitsbehälter und der darin enthaltene Flüssigkeit diese kreisförmige Bewegung auf, wodurch eine Durchmischung der enthaltenen Flüssigkeit bewirkt wird.

Theoretisch bewegt sich der Greifer synchron mit dem sich drehenden Koppelstift. In der Praxis wurde jedoch beobachtet, dass der Kontakt bzw. die Kopplung zwischen Koppelstift der Schütteleinrichtung und Koppelloch des Greifers gelegentlich zumindest kurzzeitig abreißt, weil der Koppelstift den Kontakt mit der Innenwand des Koppellochs verliert. Bei der darauffolgenden Wiederherstellung des Kontakts kann es zu kurzen Stößen kommen, die sich ebenfalls nachteilig auf den Mischvorgang auswirken können.

Die Öffnung des Koppellochs ist nämlich üblicherweise etwas größer als das eingreifende Kopfende des Koppelstiftes, um beim Einkoppeln auf eine hochpräzise Platzierung des Koppellochs über dem Koppelstift verzichten zu können, die den gesamten Mischvorgang wesentlich verlangsamen würde. Engere Fertigungstoleranzen hinsichtlich des Kopplungsmechanismus bestehend aus Koppelstift und Koppelloch würden einen erhöhten Abrieb und Verschleiß verursachen, wodurch ein häufigerer Austausch der betreffenden Teile notwendig wäre, wodurch wiederum ein erhöhter Wartungsaufwand für das automatische Analysegerät entstehen würde.

Durch den kurzzeitigen Abriss des Kontakts zwischen Koppelstift und Koppelloch kann es passieren, dass eine Flüssigkeitsprobe nicht wie gewünscht durchmischt wird und dass in der Folge ein fehlerhaftes Messergebnis generiert wird.

Die der vorliegenden Erfindung zugrunde liegende Aufgabe besteht also darin, das eingangs beschriebene automatische Verfahren zum Durchmischen einer Flüssigkeitsprobe in einem Flüssigkeitsbehälter so zu verbessern, dass der Mischvorgang gleichmäßig, d.h. ohne unerwünschte Unterbrechung abläuft, um so das gewünschte Mischergebnis zu erzielen.

Die Aufgabe wird erfindungsgemäß dadurch gelöst, dass nach dem Einführen des Koppelstiftes der Schütteleinrichtung in das an dem Greifer vorgesehene Koppelloch zunächst der Greifer oder die Schütteleinrichtung senkrecht zur Drehachse des beweglichen Koppelstifts verfahren wird, bevor der Koppelstift in Bewegung gesetzt wird.

Dies bewirkt, dass zwischen der Innenwand des Koppellochs im Greifer und dem Koppelstift eine Vorspannung erzeugt wird, die den Kontakt zwischen Koppelstift und Greifer verstärkt, so dass ein Herausspringen des Koppelstifts aus dem Koppelloch während des nachfolgenden Mischvorgangs vermieden wird. Dies hat den Effekt, dass der Mischvorgang gleichmäßig, d.h. ohne unerwünschte Unterbrechung abläuft und dass dadurch fehlerhafte Messergebnisse aufgrund von unzureichend durchmischten Reaktionsansätzen oder Reagenzflüssigkeiten vermieden werden.

Gegenstand der vorliegenden Erfindung ist demnach ein Verfahren zum Durchmischen einer Flüssigkeit in einem Flüssigkeitsbehälter, das Verfahren umfassend die Schritte:
a. Aufnahme des Flüssigkeitsbehälters mit einem über ein flexibles Verbindungselement an einem automatisch verfahrbaren Transferarm befestigten Greifer, wobei der Greifer ein Koppelloch aufweist; dann
b. Verfahren des Greifers mit dem Flüssigkeitsbehälter zu einer Schütteleinrichtung mit einem um eine senkrechte Drehachse beweglichen Koppelstift; dann
c. Herstellen einer Verbindung zwischen dem Greifer und der Schütteleinrichtung, wobei die Verbindung durch Einführen des Koppelstiftes der Schütteleinrichtung in das an dem Greifer vorgesehene Koppelloch in zur Drehachse des Koppelstiftes koaxialer Richtung erfolgt; und dann
d. Bewegen des Koppelstiftes;
wobei nach dem Einführen des Koppelstiftes der Schütteleinrichtung in das an dem Greifer vorgesehene Koppelloch in Schritt c) zunächst der Greifer oder die Schütteleinrichtung senkrecht zur Drehachse des beweglichen Koppelstifts verfahren wird, bevor der Koppelstift in Bewegung gesetzt wird.

Bevorzugterweise wird der Greifer durch horizontales Verfahren des Transferarms, an dem der Greifer befestigt ist, senkrecht zur Drehachse des beweglichen Koppelstifts verfahren. Diese Ausführungsform bietet sich insbesondere dann an, wenn die Schütteleinrichtung stationär angebracht ist. Nichtsdestotrotz ist es natürlich möglich, eine horizontal bewegbare Schütteleinrichtung vorzusehen, die horizontal bewegt und damit senkrecht zur Drehachse des beweglichen Koppelstifts verfahren wird.

Vorzugsweise wird der Greifer oder die Schütteleinrichtung so weit senkrecht zur Drehachse des beweglichen Koppelstifts verfahren, bis von der Innenwand des Koppellochs eine Querkraft auf den Koppelstift ausgeübt wird, bevor der Koppelstift in Bewegung gesetzt wird.

Die Methode eignet sich insbesondere zum Durchmischen von zu analysierenden Flüssigkeiten, z.B. Körperflüssigkeiten, wie Blut, Plasma, Serum, Urin, Fruchtwasser etc., Abwasserproben, Zellkulturüberständen wie auch von Reagenzflüssigkeiten, d.h. Flüssigkeiten, die ein oder mehrere Substanzen zum Nachweis eines oder mehrerer Analyten enthalten, wie z.B. Antikörperlösungen, Farbstofflösungen etc. oder auch von Reaktionsansätzen, d.h. Mischungen aus einer zu analysierenden Flüssigkeit und einer oder mehrerer Reagenzflüssigkeiten.

Bei einem Flüssigkeitsbehälter kann es sich beispielsweise um ein Primärprobengefäß handeln, wie z.B. ein Blutentnahmeröhrchen, das eine zu analysierende Flüssigkeit enthält, oder um ein Reaktionsgefäß, wie z.B. eine transparente, röhrchenförmige Küvette, in dem eine Primärprobe mit dem oder den Reagenzien zu einem Reaktionsansatz vermischt wird, der dann in einer Messstation gemessen wird, oder um einen Reagenzflüssigkeitsbehälter, der eine Flüssigkeit, die ein oder mehrere Substanzen zum Nachweis eines oder mehrerer Analyten enthält. Der Reagenzflüssigkeitsbehälter kann ferner mehrkammrig ausgestaltet sein und mehrere, verschiedene Reagenzflüssigkeiten enthalten.

Der an einem automatisch verfahrbaren Transferarm befestigte Greifer ist vorzugsweise Teil einer Vorrichtung zum Transfer eines Flüssigkeitsbehälters von einer ersten in eine zweite Aufnahmeposition. Der Greifer kann Teil eines mechanischen, magnetischen, pneumatischen oder adhäsiven Greifsystems sein. Ein mechanischer Greifer kann als Einfinger-, Zweifinger- oder Mehrfingergreifer ausgestaltet sein, und er kann starr, gelenkig oder elastisch ausgeführt sein. Bevorzugterweise handelt es sich bei dem Greifer um einen passiven Klemmgreifer zum kraftschlüssigen Erfassen und Halten eines Flüssigkeitsbehälters. Dieser kann einstückig und elastisch verformbar ausgestaltet sein.

Bei einer bevorzugten Ausführungsform des erfindungsgemäßen Verfahrens wird ein passiver Greifer zum kraftschlüssigen Erfassen und Halten eines Flüssigkeitsbehälters verwendet. Der Greifer kann einstückig und elastisch verformbar ausgestaltet sein. Der Greifer befindet sich vorzugsweise in einem Spannungszustand, so dass es, wenn er mit ausreichender Kraft gegen einen Flüssigkeitsbehälter gedrückt wird, zu einem Schnappeffekt kommt, und der Greifer sich öffnet und den Flüssigkeitsbehälter umgreift und festhält. Umgekehrt öffnet sich der Greifer erst wieder und gibt den Flüssigkeitsbehälter frei, wenn der Greifer mit ausreichender Kraft von einem fixierten Flüssigkeitsbehälter wegbewegt wird.

Das flexible Verbindungselement, das zur Befestigung des Greifers an dem automatisch verfahrbaren Transferarm vorgesehen ist, bewirkt, dass die Bewegung der Schütteleinrichtung überwiegend auf den Flüssigkeitsbehälter und nicht auf den Transferarm übertragen wird. Das flexible Verbindungselement besteht dazu vorzugsweise aus einem elastischen und/oder dämpfenden Werkstoff, wie zum Beispiel einem Elastomer, Urethangummi, Kautschuk, Gummi, Schaumstoff oder Federstahl. Das flexible Verbindungselement kann einstückig ausgebildet sein oder aus mehreren, separaten Einzelelementen bestehen.

Die Schütteleinrichtung weist einen um eine senkrechte Drehachse beweglichen Koppelstift auf, der von einem Motor angetrieben wird. Vorzugsweise wird der Koppelstift in horizontaler Ebene auf einer Kreisbahn bewegt. Dazu kann er beispielsweise auf einem um eine senkrechte Drehachse beweglichen Teller angebracht sein. Typische Frequenzen für die Bewegung des Koppelstiftes liegen zwischen 30 und 70 Umdrehungen pro Sekunde.

Vorzugsweise weist der Koppelstift der Schütteleinrichtung ein kugelförmiges Kopfende auf. Dies ermöglicht eine besonders reibungsarme Kopplung mit dem komplementären Koppelloch im Greifer. Der Koppelstift kann aus unterschiedlichen Materialien bestehen, vorzugsweise aus Kunststoff oder Metall.

Das an dem Greifer vorgesehene Koppelloch weist vorzugsweise eine zur Form des Koppelstiftes komplementäre Form auf, vorzugsweise eine halbkugelförmige oder kreiszylindrische Form. In der einfachsten Ausführung handelt es sich bei dem Koppelloch um eine entsprechende Bohrung in dem Greifer.

Ein weiterer Gegenstand der vorliegenden Erfindung ist ein automatisches Analysegerät mit
i) einer Vorrichtung zum Transfer eines Flüssigkeitsbehälters, die Vorrichtung umfassend einen horizontal und vertikal bewegbaren Transferarm und einen über ein flexibles Verbindungselement mit dem Transferarm verbundenen Greifer zum Erfassen, Halten und Freigeben eines Flüssigkeitsbehälters, wobei der Greifer ein Koppelloch aufweist,
ii) mehreren Aufnahmepositionen zur Aufnahme jeweils eines Flüssigkeitsbehälters,
iii) einer Schütteleinrichtung mit einem um eine senkrechte Drehachse beweglichen Koppelstift und
iv) mit einer Steuervorrichtung, die so konfiguriert ist, dass sie das vorbeschriebene, erfindungsgemäße Verfahren zum Durchmischen einer Flüssigkeit in einem Flüssigkeitsbehälter steuert.

Insbesondere ist die Steuervorrichtung des erfindungsgemäßen automatischen Analysegeräts so konfiguriert, dass sie ein Verfahren zum Durchmischen einer Flüssigkeit in einem Flüssigkeitsbehälter mit den folgenden Schritten steuert:
a. Aufnahme eines Flüssigkeitsbehälters aus einer Aufnahmeposition mit dem Greifer,; dann
b. Verfahren des Greifers mit dem Flüssigkeitsbehälter zu der Schütteleinrichtung; dann
c. Herstellen einer Verbindung zwischen dem Greifer und der Schütteleinrichtung, wobei die Verbindung durch Einführen des Koppelstiftes der Schütteleinrichtung in das an dem Greifer vorgesehene Koppelloch in zur Drehachse des Koppelstiftes koaxialer Richtung erfolgt; und dann
d. Bewegen des Koppelstiftes;
und wobei nach dem Einführen des Koppelstiftes der Schütteleinrichtung in das an dem Greifer vorgesehene Koppelloch in Schritt c) zunächst der Greifer oder die Schütteleinrichtung senkrecht zur Drehachse des beweglichen Koppelstifts verfahren wird, bevor der Koppelstift in Bewegung gesetzt wird.

Die für das erfindungsgemäße Verfahren weiter oben beschriebenen Ausführungsformen und Vorteile treffen in analoger Weise auf das erfindungsgemäße Analysegerät zu.

In einer Ausführungsform des automatischen Analysegeräts ist der Koppelstift der Schütteleinrichtung auf einem um eine senkrechte Drehachse beweglichen Teller angebracht ist.

In einer weiteren Ausführungsform des automatischen Analysegeräts weist der Koppelstift der Schütteleinrichtung ein kugelförmiges Kopfende auf.

In noch einer weiteren Ausführungsform des automatischen Analysegeräts weist das an dem Greifer vorgesehene Koppelloch eine halbkugelförmige oder eine kreiszylindrische Form auf.

Die Vorrichtung zum Transfer eines Flüssigkeitsbehälters ist vorzugsweise zum Transfer einer Flüssigkeitsbehälters aus der Gruppe Reaktionsgefäß und Reagenzflüssigkeitsbehälter vorgesehen.

Eine weitere Ausführungsform des automatischen Analysegeräts ist zusätzlich mit einer Inkubationseinrichtung mit mehreren Aufnahmepositionen für jeweils ein Reaktionsgefäß und mit einer einer Messstation zugeordneten Aufnahmeeinrichtung mit mehreren Aufnahmepositionen für jeweils ein Reaktionsgefäß ausgestattet. Die Aufnahme eines Flüssigkeitsbehälters aus einer Aufnahmeposition mit dem Greifer in Schritt a) besteht dann in einer Aufnahme eines mit einem Reaktionsansatz befüllten Reaktionsgefäßes aus einer Aufnahmeposition der Inkubationseinrichtung, und die Steuervorrichtung eines solchen Analysegeräts ist ferner so konfiguriert, dass nach dem Durchmischen des Reaktionsansatzes in dem Reaktionsgefäß das Reaktionsgefäß von der Vorrichtung zum Transfer eines Flüssigkeitsbehälters in eine Aufnahmeposition der der Messstation zugeordneten Aufnahmeeinrichtung transferiert wird. Dort kann dann die Messung des Reaktionsansatzes durchgeführt werden, ohne dass durch unzureichende Durchmischung verursachte Messfehler zu erwarten sind.

Die Erfindung wird im Folgenden anhand einer Zeichnung erläutert.

Darin zeigen
- FIG. 1: ein erfindungsgemäßes automatisches Analysegerät;
- FIG. 2: Anordnung zum Durchmischen eines Reaktionsansatzes in einer Küvette.

Gleiche Teile sind in allen Figuren mit denselben Bezugszeichen versehen.

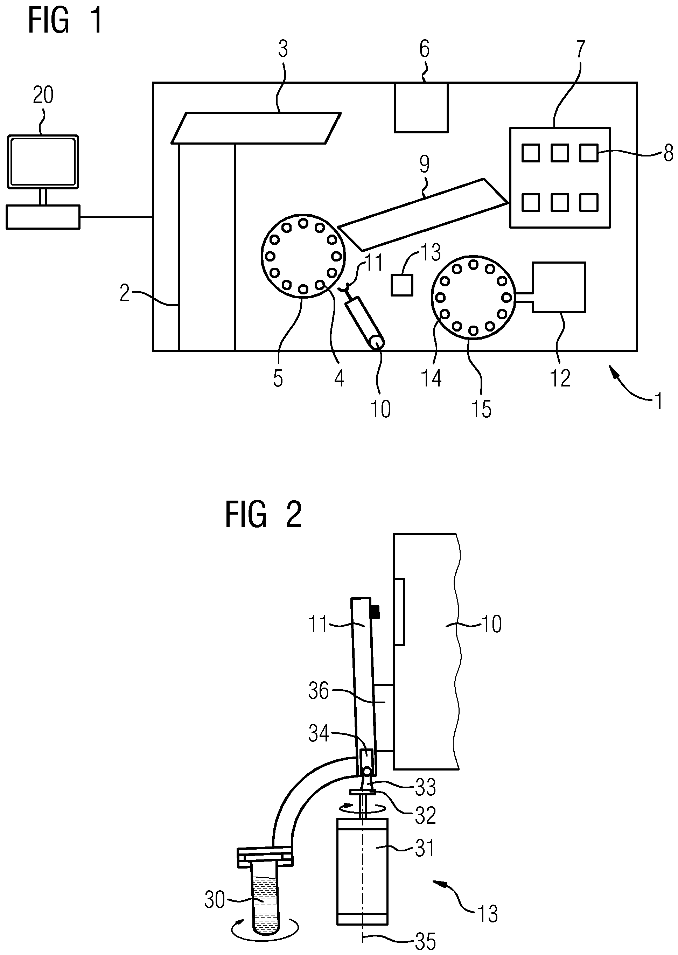

FIG. 1 ist eine schematische Darstellung eines automatischen Analysegeräts 1 mit einigen darin enthaltenen Bauteilen. Hierbei werden nur die wichtigsten Bauteile stark vereinfacht dargestellt, um die grundsätzliche Funktion des automatischen Analysegeräts 1 zu erläutern, ohne hierbei detailliert die einzelnen Teile jedes Bauteils darzustellen.

Das automatische Analysegerät 1 ist dafür ausgebildet, vollautomatisch verschiedenste Analysen von Blut oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur und Nachfüllarbeiten, wenn z.B. Küvetten nachgefüllt oder Flüssigkeitsbehälter ausgetauscht werden müssen.

Die Patientenproben werden dem automatischen Analysegerät 1 auf nicht näher dargestellten Schlitten über eine Zuführungsschiene 2 zugeführt. Informationen hinsichtlich der pro Probe durchzuführenden Analysen können beispielsweise mittels auf den Probengefäßen angebrachten Strichcodes übergeben werden, die in dem automatischen Analysegerät 1 ausgelesen werden. Aus den Probengefäßen werden mit Hilfe einer ersten Pipettiervorrichtung 3 Probenaliquots mittels einer Pipettiernadel entnommen.

Die Probenaliquots werden ebenfalls nicht näher dargestellten Küvetten zugeführt, die in Aufnahmepositionen 4 einer drehbaren, auf 37 °C temperierten Inkubationseinrichtung 5 angeordnet sind. Die Küvetten werden aus einem Küvettenvorratsbehälter 6 entnommen. In dem auf ca. 8-10 °C gekühlten Reagenzgefäßvorratsbehälter 7 werden Reagenzgefäße 8 mit verschiedenen Reagenzflüssigkeiten aufbewahrt. Reagenzflüssigkeit wird mittels der Pipettiernadel einer zweiten Pipettiervorrichtung 9 aus einem Reagenzgefäß 8 entnommen und zur Bereitstellung eines Reaktionsansatzes in eine Küvette, die bereits ein Probenaliquot enthält, abgegeben. Die Küvette mit dem Reaktionsansatz wird von dem Transferarm 10 mit einem Greifer 11 aus einer Aufnahmeposition 4 der Inkubationseinrichtung 5 entnommen und zum Durchmischen des Reaktionsansatzes zu einer in FIG. 2 näher dargestellten Schütteleinrichtung 13 transferiert. Nach Beendigung des Mischvorgangs wird die Küvette weiter in eine Aufnahmeposition 14 der drehbaren Aufnahmevorrichtung 15 für die photometrische Messstation 12 transportiert, wo die Extinktion des Reaktionsansatzes gemessen wird.

Der gesamte Prozess wird von einer Steuereinheit 20, wie z.B. von einem über eine Datenleitung angeschlossenen Rechner gesteuert, unterstützt durch eine Vielzahl weiterer, nicht näher dargestellter elektronischer Schaltungen und Mikroprozessoren innerhalb des automatischen Analysegeräts 1 und seiner Bauteile.

FIG. 2 zeigt den über ein flexibles Verbindungselement 36 an einem automatisch verfahrbaren Transferarm 10 befestigten Greifer 11, der eine mit einem Reaktionsansatz gefüllte Küvette 30 hält. Durch senkrechtes Absenken des Transferarmes 10 wurde der Greifer 11 oberhalb der Schütteleinrichtung 13 positioniert. Die Schütteleinrichtung 13 besteht aus einem Motor 31, der einen Teller 32 mit einem exzentrischen Koppelstift 33 aufweist. Der Greifer 11 wurde so positioniert, dass der Koppelstift 33 mit dem kugelförmigen Kopfende in das am Greifer vorgesehene Koppelloch 34 im Wesentlichen mittig eingeführt ist. Bevor der Koppelstift 33 nun durch Drehen des Tellers 32 in Bewegung gesetzt wird, wird der Greifer 11 durch eine horizontale Bewegung des Transferarms 10 senkrecht zur Drehachse 35 des beweglichen Koppelstifts 33 so weit verfahren, bis der Koppelstift 33 eine Innenseite des Koppellochs 34 berührt, damit zwischen der Innenwand des Koppellochs 34 und dem Koppelstift 33 eine Vorspannung/Querkraft erzeugt wird, die den Kontakt zwischen Koppelstift 33 und Greifer 11 verstärkt. Dadurch wird ein Herausspringen des Koppelstifts 33 aus dem Koppelloch 34 während des nachfolgenden Mischvorgangs vermieden, und der Mischvorgang kann gleichmäßig und ohne unerwünschte Unterbrechung ablaufen.

### BEZUGSZEICHENLISTE

- 1: Analysegerät
- 2: Zuführungsschiene
- 3: Pipettiervorrichtung
- 4: Aufnahmeposition
- 5: Inkubationseinrichtung
- 6: Küvettenvorratsbehälter
- 7: Reagenzgefäßvorratsbehälter
- 8: Reagenzgefäß
- 9: Pipettiervorrichtung
- 10: Transferarm
- 11: Greifer
- 12: Messstation
- 13: Schütteleinrichtung
- 14: Aufnahmeposition
- 15: Aufnahmevorrichtung
- 20: Steuereinheit
- 30: Küvette
- 31: Motor
- 32: Teller
- 33: Koppelstift
- 34: Koppelloch
- 35: Drehachse
- 36: flexibles Verbindungselement

## Patentansprüche

1. Verfahren zum Durchmischen einer Flüssigkeit in einem Flüssigkeitsbehälter (30), das Verfahren umfassend die Schritte:
a. Aufnahme des Flüssigkeitsbehälters (30) mit einem über ein flexibles Verbindungselement (36) an einem automatisch verfahrbaren Transferarm (10) befestigten Greifer (11), wobei der Greifer (11) ein Koppelloch (34) aufweist; dann
b. Verfahren des Greifers (11) mit dem Flüssigkeitsbehälter (30) zu einer Schütteleinrichtung (13) mit einem um eine senkrechte Drehachse (35) beweglichen Koppelstift (33); dann
c. Herstellen einer Verbindung zwischen dem Greifer (11) und der Schütteleinrichtung (13), wobei die Verbindung durch Einführen des Koppelstiftes (33) der Schütteleinrichtung (13) in das an dem Greifer (11) vorgesehene Koppelloch (34) in zur Drehachse (35) des Koppelstiftes (33) koaxialer Richtung erfolgt; und dann
d. Bewegen des Koppelstiftes (33);
**dadurch gekennzeichnet, dass**
nach dem Einführen des Koppelstiftes (33) der Schütteleinrichtung (13) in das an dem Greifer (11) vorgesehene Koppelloch (34) in Schritt c) zunächst der Greifer (11) oder die Schütteleinrichtung (13) senkrecht zur Drehachse (35) des beweglichen Koppelstifts (3) verfahren wird, bevor der Koppelstift (33) in Bewegung gesetzt wird.

2. Verfahren gemäß Anspruch 1, wobei der Greifer (11) oder die Schütteleinrichtung (13) so weit senkrecht zur Drehachse (35) des beweglichen Koppelstifts (33) verfahren wird, bis dass von der Innenwand des Koppellochs (34) eine Querkraft auf den Koppelstift (33) ausgeübt wird, bevor der Koppelstift (33) in Bewegung gesetzt wird.

3. Verfahren gemäß einem der vorhergehenden Ansprüche, wobei der Greifer (11) durch horizontales Verfahren des Transferarms (10) senkrecht zur Drehachse (35) des beweglichen Koppelstifts (33) verfahren wird.

4. Verfahren gemäß einem der vorhergehenden Ansprüche zum Durchmischen einer Flüssigkeit aus der Gruppe Körperflüssigkeit und Reaktionsansatz.

5. Automatisches Analysegerät (1) mit
i) einer Vorrichtung zum Transfer eines Flüssigkeitsbehälters, die Vorrichtung umfassend einen horizontal und vertikal bewegbaren Transferarm (10) und einen über ein flexibles Verbindungselement (36) mit dem Transferarm (10) verbundenen Greifer (11) zum Erfassen, Halten und Freigeben eines Flüssigkeitsbehälters (30), wobei der Greifer (11) ein Koppelloch (34) aufweist,
ii) mehreren Aufnahmepositionen (4) zur Aufnahme jeweils eines Flüssigkeitsbehälters (30),
iii) einer Schütteleinrichtung (13) mit einem um eine senkrechte Drehachse (35) beweglichen Koppelstift (33) und
iv) mit einer Steuervorrichtung, die so konfiguriert ist, dass sie ein Verfahren zum Durchmischen einer Flüssigkeit in einem Flüssigkeitsbehälter (30) mit den folgenden Schritten steuert:
a. Aufnahme eines Flüssigkeitsbehälters (30) aus einer Aufnahmeposition (4) mit dem Greifer (11),; dann
b. Verfahren des Greifers (11) mit dem Flüssigkeitsbehälter (30) zu der Schütteleinrichtung (13); dann
c. Herstellen einer Verbindung zwischen dem Greifer (11) und der Schütteleinrichtung (13), wobei die Verbindung durch Einführen des Koppelstiftes (33) der Schütteleinrichtung (13) in das an dem Greifer (11) vorgesehene Koppelloch (34) in zur Drehachse (35) des Koppelstiftes (33) koaxialer Richtung erfolgt; und dann
d. Bewegen des Koppelstiftes (33);
**dadurch gekennzeichnet, dass** nach dem Einführen des Koppelstiftes (33) der Schütteleinrichtung (13) in das an dem Greifer (11) vorgesehene Koppelloch (34) in Schritt c) zunächst der Greifer (11) oder die Schütteleinrichtung (13) senkrecht zur Drehachse (35) des beweglichen Koppelstifts (33) verfahren wird, bevor der Koppelstift (33) in Bewegung gesetzt wird.

6. Automatisches Analysegerät (1) gemäß Anspruch 5, bei dem der Koppelstift (33) der Schütteleinrichtung (13) auf einem um eine senkrechte Drehachse (35) beweglichen Teller (32) angebracht ist.

7. Automatisches Analysegerät (1) gemäß einem der Ansprüche 5 und 6, bei dem der Koppelstift (33) der Schütteleinrichtung (13) ein kugelförmiges Kopfende aufweist.

8. Automatisches Analysegerät (1) gemäß einem der Ansprüche 5 bis 7, bei dem das an dem Greifer (11) vorgesehene Koppelloch (34) eine halbkugelförmige oder eine kreiszylindrische Form aufweist.

9. Automatisches Analysegerät (1) gemäß einem der Ansprüche 5 bis 8, bei dem die Vorrichtung zum Transfer eines Flüssigkeitsbehälters (30) zum Transfer einer Flüssigkeitsbehälters aus der Gruppe Reaktionsgefäß und Reagenzflüssigkeitsbehälter vorgesehen ist.

10. Automatisches Analysegerät (1) gemäß Anspruch 9, zusätzlich mit einer Inkubationseinrichtung (5) mit mehreren Aufnahmepositionen (4) für jeweils ein Reaktionsgefäß (30) und mit einer einer Messstation (12) zugeordneten Aufnahmeeinrichtung (15) mit mehreren Aufnahmepositionen (14) für jeweils ein Reaktionsgefäß (30), wobei die Aufnahme eines Flüssigkeitsbehälters (30) aus einer Aufnahmeposition (4) mit dem Greifer (11) in Schritt a) eine Aufnahme eines mit einem Reaktionsansatz befüllten Reaktionsgefäßes (30) aus einer Aufnahmeposition (4) der Inkubationseinrichtung (5) ist und wobei die Steuervorrichtung, ferner so konfiguriert ist, dass nach dem Durchmischen des Reaktionsansatzes in dem Reaktionsgefäß (30) das Reaktionsgefäß (30) von der Vorrichtung zum Transfer eines Flüssigkeitsbehälters in eine Aufnahmeposition (14) der der Messstation (12) zugeordneten Aufnahmeeinrichtung (15) transferiert wird.

## Claims

1. Method for mixing a liquid in a liquid container (30), the method comprising the steps:
a. receiving the liquid container (30) by way of a gripper (11) which is fastened by way of a flexible connecting element (36) to an automatically movable transfer arm (10), wherein the gripper (11) has a coupling hole (34); then
b. displacing the gripper (11) with the liquid container (30) to a shaking device (13) with a coupling pin (33) which is movable about a vertical axis of rotation (35); then
c. producing a connection between the gripper (11) and the shaking device (13), wherein the connection is realized by insertion of the coupling pin (33) of the shaking device (13) into the coupling hole (34), which is provided on the gripper (11), in a direction coaxial with respect to the axis of rotation (35) of the coupling pin (33); and then
d. moving the coupling pin (33);
**characterized in that**,
after the insertion of the coupling pin (33) of the shaking device (13) into the coupling hole (34) provided on the gripper (11) in step c), the gripper (11) or the shaking device (13) is firstly displaced perpendicular to the axis of rotation (35) of the movable coupling pin (3) before the coupling pin (33) is set in motion.

2. Method according to Claim 1, wherein the gripper (11) or the shaking device (13) is displaced perpendicularly with respect to the axis of rotation (35) of the movable coupling pin (33) until the inner wall of the coupling hole (34) exerts a transverse force on the coupling pin (33), before the coupling pin (33) is set in motion.

3. Method according to one of the preceding claims, wherein the gripper (11) is displaced perpendicularly with respect to the axis of rotation (35) of the movable coupling pin (33) by horizontal displacement of the transfer arm (10).

4. Method according to one of the preceding claims for mixing a liquid from the group of bodily fluid and reaction mix.

5. Automated analyzer (1) having
i) an apparatus for transferring a liquid container, the apparatus comprising a horizontally and vertically movable transfer arm (10) and a gripper (11) which is connected by way of a flexible connecting element (36) to the transfer arm (10) and which serves for gripping, holding and releasing a liquid container (30), wherein the gripper (11) has a coupling hole (34),
ii) multiple receiving positions (4) for receiving in each case one liquid container (30),
iii) a shaking device (13) having a coupling pin (33) which is movable about a vertical axis of rotation (35), and
iv) having a control apparatus which is configured so as to control a method for mixing a liquid in a liquid container (30), the method comprising the following steps:
a. receiving a liquid container (30) from a receiving position (4) by way of the gripper (11); then
b. displacing the gripper (11) with the liquid container (30) to the shaking device (13); then
c. producing a connection between the gripper (11) and the shaking device (13), wherein the connection is realized by insertion of the coupling pin (33) of the shaking device (13) into the coupling hole (34), which is provided on the gripper (11), in a direction coaxial with respect to the axis of rotation (35) of the coupling pin (33); and then
d. moving the coupling pin (33);
**characterized in that**,
after the insertion of the coupling pin (33) of the shaking device (13) into the coupling hole (34) provided on the gripper (11) in step c), the gripper (11) or the shaking device (13) is firstly displaced perpendicular to the axis of rotation (35) of the movable coupling pin (33) before the coupling pin (33) is set in motion.

6. Automated analyzer (1) according to Claim 5, in which the coupling pin (33) of the shaking device (13) is attached to a plate (32) which is movable about a vertical axis of rotation (35).

7. Automated analyzer (1) according to either of Claims 5 and 6, in which the coupling pin (33) of the shaking device (13) has a spherical head end.

8. Automated analyzer (1) according to one of Claims 5 to 7, in which the coupling hole (34) provided on the gripper (11) has a hemispherical or circular cylindrical shape.

9. Automated analyzer (1) according to one of Claims 5 to 8, in which the apparatus for transferring a liquid container (30) is provided for transferring a liquid container from the group comprising reaction vessel and reagent liquid container.

10. Automated analyzer (1) according to Claim 9, additionally having an incubation device (5) with multiple receiving positions (4) for in each case one reaction vessel (30) and having a receiving device (15) which is assigned to a measurement station (12) and which has multiple receiving positions (14) for in each case one reaction vessel (30), wherein the receiving of a liquid container (30) from a receiving position (4) by way of the gripper (11) in step a) is the receiving of a reaction vessel (30) filled with a reaction mix from a receiving position (4) of the incubation device (5), and wherein the control apparatus is furthermore configured such that, after the mixing of the reaction mix in the reaction vessel (30), the reaction vessel (30) is transferred, by the apparatus for transferring a liquid container, into a receiving position (14) of the receiving device (15) assigned to the measurement station (12).

## Revendications

1. Procédé de mélange d'un liquide dans un récipient (30) à liquide, le procédé comprenant les stades :
a. réception du récipient (30) à liquide par un outil (11) de préhension fixé, par l'intermédiaire d'un élément (36) souple de liaison, à un bras (10) de transfert pouvant être déplacé automatiquement, l'outil (11) de préhension ayant un trou (34) de couplage, puis
b. déplacement de l'outil (11) de préhension avec le récipient (30) à liquide vers un dispositif (13) d'agitation, ayan une tige (33) de couplage, mobile autour d'un axe (35) de rotation vertical, puis
c. production d'une liaison entre l'outil (11) de préhension et le dispositif (13) d'agitation, la liaison s'effectuant, suivant une direction coaxiale à l'axe ( 35 ) de rotation de la tige ( 33 ) de couplage, par introduction de la tige (33) de couplage du dispositif (13) d'agitation dans le trou (34) de couplage prévu dans l'outil de préhension, puis
d. mise en mouvement de la tige ( 33 ) de couplage;
**caractérisé en ce que**
après l'introduction de la tige ( 33 ) de couplage du dispositif (13) d'agitation dans le trou ( 34 ) de couplage prévu dans l'outil (11) de préhension, au stade c), on déplace d'abord l'outil (11) de préhension ou le dispositif (13) d'agitation perpendiculairement à l'axe (35) de rotation de la tige (3) de couplage mobile, avant de mettre la tige (33) de couplage en mouvement.

2. Procédé suivant la revendication 1, dans lequel on déplace l'outil (11) de préhension ou le dispositif (13) d'agitation perpendiculairement à l'axe (35) de rotation de la tige ( 33 ) de couplage mobile jusqu'à appliquer, par la paroi intérieure du trou ( 34 ) de couplage, une force transversale à la tige ( 33 ) de couplage, avant de mettre la tige ( 33 ) de couplage en mouvement.

3. Procédé suivant l'une des revendications précédente, dans lequel on déplace l'outil (11) de préhension en déplaçant horizontalement le bras (10) de transfert perpendiculairement à l'axe (35) de rotation de la tige ( 33 ) de couplage mobile.

4. Procédé suivant l'une des revendications précédentes, pour mélanger un liquide choisi dans le groupe d'un liquide corporel et une masse réactionnelle.

5. Appareil (1) d'analyse automatique, comprenant
i) un système de transfert d'un récipient à liquide, le système comprenant un bras (10) de transfert mobile horizontalement et verticalement et un outil (11) de préhension, relié par un élément (36) de liaison souple au bras (10) de transfert, pour prendre, maintenir et libérer un récipient ( 30 ) à liquide, l'outil (11) de préhension ayant un trou ( 34 ) de couplage,
ii) plusieurs positions (4) de réception pour recevoir chacune un récipient ( 30 ) à liquide,
iii) un dispositif (13) d'agitation ayant une tige ( 33 ) de couplage mobile autour d'un axe (35) de rotation vertical et
iv) comprenant un système de commande configuré de manière à commander un procédé de mélange d'un liquide dans un récipient ( 30 ) à liquide, ayant les stades suivants :
a. réception d'un récipient ( 30 ) à liquide d'une position ( 4) de réception par l'outil (11) de préhension, puis
b. déplacement de l'outil (11) de préhension avec le récipient ( 30 ) à liquide vers le dispositif (13) d'agitation;
c. production d'une liaison entre l'outil (11) de préhension et le dispositif (13 ) d'agitation, la liaison s'effectuant, suivant une direction coaxiale à l'axe (35) de rotation de la tige ( 33 ) de couplage, par introduction de la tige ( 33 ) de couplage du dispositif (13) d'agitation dans le trou ( 34 ) de couplage prévu dans l'outil de préhension, puis
d. mise en mouvement de la tige ( 33 ) de couplage;
**caractérisé en ce que**
après l'introduction de la tige ( 33 ) de couplage du dispositif (13) d'agitation dans le trou ( 34 ) de couplage prévu dans l'outil (11) de préhension, au stade c), on déplace d'abord l'outil (11) de préhension ou le dispositif (13) d'agitation perpendiculairement à l'axe (35) de rotation de la tige (3) de couplage mobile, avant de mettre la tige ( 33 ) de couplage en mouvement.

6. Appareil (1) d'analyse automatique suivant la revendication 5, dans lequel la tige ( 33 ) de couplage du dispositif (13) d'agitation est mise sur une cuvette (32) mobile autour d'un axe (35) de rotation vertical.

7. Appareil (1) d'analyse automatique suivant l'une des revendications 5 et 6, dans lequel la tige ( 33 ) de couplage du dispositif (13) d'agitation a une extrémité de tête sphérique.

8. Appareil (1) d'analyse automatique suivant l'une des revendications 5 à 7, dans lequel le trou ( 34 ) de couplage, prévu sur l'outil (11) de préhension, a une forme hémisphérique ou une forme cylindrique de section circulaire.

9. Appareil (1) d'analyse automatique suivant l'une des revendications 5 à 8, dans lequel le système de transfert d'un récipient ( 30 ) à liquide, pour transférer un récipient à liquide, est choisi dans le groupe vase de réaction et récipient à liquide réactif.

10. Appareil (1) d'analyse automatique suivant la revendication 9, comprenant, en outre, un dispositif (5) d'incubation ayant plusieurs positions ( 4) de réception de respectivement un vase ( 30 ) de réaction et ayant un dispositif (15) de réception associé à un poste (12) de mesure et ayant plusieurs positions (14) de réception de respectivement un vase ( 30 ) de réaction, la réception d'un récipient (30) à liquide d'une position ( 4) de réception par l'outil (11) de préhension au stade a) étant une réception d'un vase (30) de réaction rempli d'une masse réactionnelle d'une position ( 4) de réception du dispositif (5) d'incubation et dans lequel le dispositif de commande est configuré, en outre, de manière à ce qu'après le mélange de la masse réactionnelle dans le vase ( 30 ) de réaction, le vase ( 30 ) de réaction soit transféré, par le système de transfert d'un récipient à liquide, dans une position (14) de réception du dispositif (15) de réception associé au poste (12) de mesure.
